# EUROPÄISCHE PATENTANMELDUNG

(11) **EP 1 596 057 A2**
(43) Veröffentlichungstag der Anmeldung: **16.11.2005**
(21) Anmeldenummer: 05103992.3
(22) Anmeldetag: 12.05.2005
(51) Int. Cl.: F02M 37/10

(54) **Kraftstoffmodul**

(30) Priorität: 14.05.2004 DE 102004024466
(71) Anmelder: MANN+HUMMEL GmbH, 71638 Ludwigsburg (DE)
(72) Erfinder: Schreckenberger, Dieter, 71672, Marbach (DE); Amesöder, Dieter, 74321, Bietigheim-Bissingen (DE); Urbahn, Arndt, 71642, Ludwigsburg (DE)

(57) **Zusammenfassung**

Die Erfindung betrifft ein Kraftstoffmodul, insbesondere für Dieselkraftstoff einer Brennkraftmaschine. Das Kraftstoffmodul verfügt über einen Kraftstofftank (10) und einen Kraftstofffilter (11). Der Kraftstofftank (10) verfügt über eine Wand (12), welche das Volumen des Kraftstofftanks (10) umschließt. Die Wand (12) im Bereich des Kraftstofffilters (11) verfügt über eine Öffnung. Der Kraftstofffilter (11) ist im Bereich der Öffnung mit der Wand (12) dichtend verbunden. Der Kraftstofffilter (11) verfügt über ein Filtermedium (26), welches zur Abscheidung von Wasser aus dem zu reinigenden Kraftstoff geeignet ist. Weiterhin ist innerhalb des Kraftstofffilters (11) ein Wasserspeicher (38) angeordnet, in welchem das abgeschiedene Wasser gesammelt wird.

## Beschreibung

Die Erfindung betrifft ein Kraftstoffmodul nach dem Oberbegriff des Patentanspruchs 1.

### Stand der Technik

Aus der DE 195 31 467 A1 ist eine Vorrichtung zur Versorgung einer Brennkraftmaschine eines Kraftfahrzeuges mit einem Kraftstoffbehälter und einem darin enthaltenen Kraftstoff bekannt. In dem Kraftstoffbehälter ist ein Kraftstoffförderaggregat angeordnet, das über eine erste Förderstrecke Kraftstoff einem Kraftstofffilter zuführt. Der Kraftstofffilter ist unmittelbar an einer Halterung angeordnet und weist eine zweite Förderstrecke auf, die als integrierte innere, hydraulische Verbindung ausgebildet ist. Dieser Aufbau zeigt eine einfache Anordnung und Anbringung des Kraftstofffilters an einem Kraftstoffbehälter.

Es ist weiterhin aus der EP 0 579 540 B1 eine modulartige Ansauganordnung für Brennstofftanks, insbesondere von Kraftfahrzeugen, bekannt, wobei eine Aufnahme für ein Kraftstofffilter vorgesehen ist. Diese Aufnahme befindet sich im oberen Teil des Tanks und kann zur Außenseite des Tanks geöffnet werden, so dass ein Austausch des Filters erforderlichenfalls möglich ist. Der Filter ist in einer Filterkartusche angeordnet, die ebenfalls herausnehmbar ist.

Der Erfindung liegt die Aufgabe zugrunde, die genannten im Stand der Technik bekannten Vorrichtungen weiterzubilden und ein Kraftstoffmodul zu schaffen, welches geeignet ist, für Brennkraftmaschinen Kraftstoff von hoher Qualität zur Verfügung zu stellen.

Diese Aufgabe wird durch die Merkmale des unabhängigen Anspruches 1 gelöst. Die Vorteile der Erfindung und Vorteile von Weiterbildungen werden nachfolgend anhand der Figuren beschrieben.

### Zeichnung

Weitere Einzelheiten der Erfindung werden in der Zeichnung anhand von schematischen Ausführungsbeispielen beschrieben. Hierbei zeigt
- Figur 1: einen Ausschnitt aus einem Kraftstoffmodul,
- Figur 2: einen Kraftstofffilter im Schnitt,
- Figur 3: einen Ausschnitt aus dem Kraftstoffmodul gemäß Figur 1 im Schnitt,
- Figur 4: einen weiteren Ausschnitt aus dem Kraftstoffmodul gemäß Figur 1 im Schnitt,
- Figur 5: einen Ausschnitt aus dem Kraftstofffilter gemäß Figur 1 im Schnitt und
- Figur 6: eine Schemadarstellung des Kraftstoffmoduls.

### Beschreibung der Ausführungsbeispiele

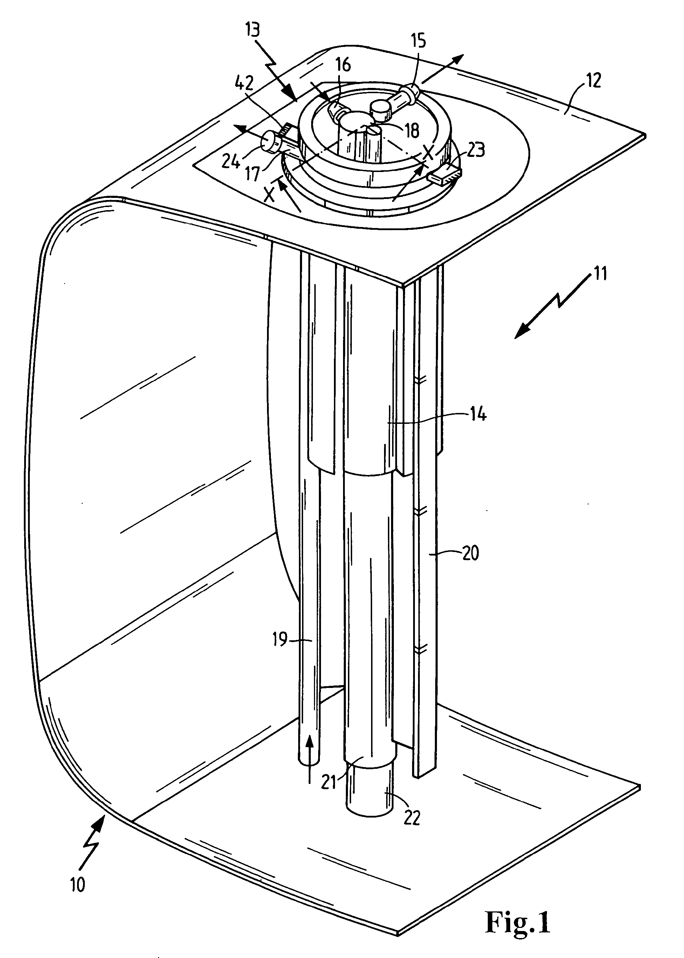

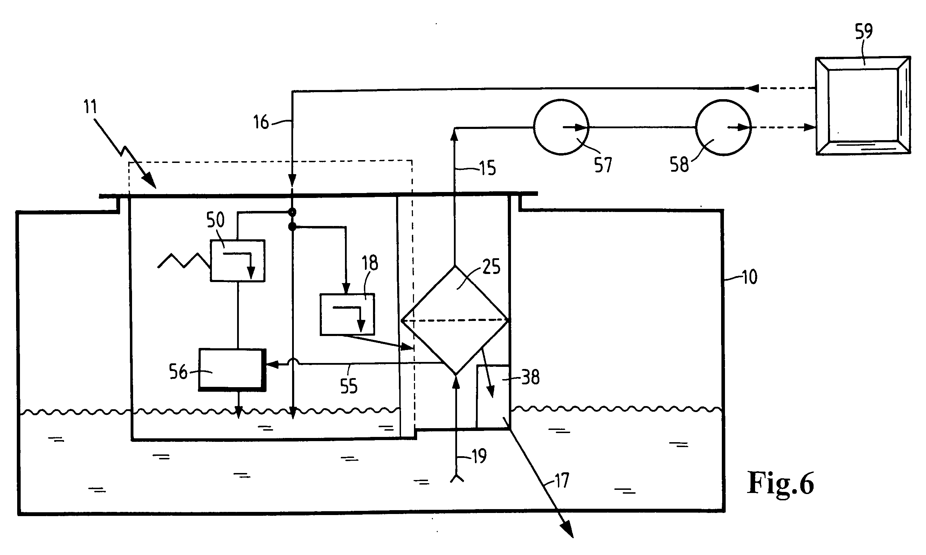

In Figur 1 ist ein Ausschnitt aus einem Kraftstoffmodul dargestellt. Das Kraftstoffmodul verfügt über einen Kraftstofftank 10 und einen Kraftstofffilter 11. Der Kraftstofftank 10 ist als geschlossenes, ein Volumen umschließendes Bauteil ausgeführt, wobei nur ein Teilstück dargestellt ist. Das Volumen des Kraftstofftanks 10 ist derart ausgelegt, dass eine Brennkraftmaschine über eine definierte Betriebszeit verfügt. Diese Brennkraftmaschine kann z.B. in einem Kraftfahrzeug angeordnet sein, wobei das Kraftfahrtzeug über eine bestimmte Reichweite verfügt. Das Kraftfahrzeug, in welchem das Kraftstoffmodul angeordnet sein kann, ist z. B. ein Lastkraftwagen, eine Baumaschine oder eine Landwirtschaftsmaschine. Selbstverständlich kann das erfindungsgemäße Kraftstoffmodul auch in anderen Kraftfahrzeugen eingesetzt werden. Je größer das Volumen ist, desto größer ist auch die Reichweite des Kraftfahrzeuges bzw. die Betriebsdauer der Brennkraftmaschine. Der Kraftstofftank 10 verfügt über eine Wand 12, welche aus Metall oder Kunststoff bestehen kann. Diese Wand 12 begrenzt das Volumen des Kraftstofftanks 10, wobei der Kraftstofftank 10 eine beliebige Form aufweisen kann. Vorzugsweise ist der Kraftstofftank 10 als rechteckiger Quader oder Zylinder ausgeführt. Der Kraftstofffilter 11 verfügt über einen Filterkopf 13 und ein Filtergehäuse 14. Der Kraftstofffilter 11 ist dichtend mit der Wand 12 des Kraftstofftanks 10 verbunden, wobei der Filterkopf 13 außerhalb und das Filtergehäuse 14 innerhalb des Kraftstofftanks 10 angeordnet ist. Der Filterkopf 13 verfügt über einen Kraftstoffauslass 15 einen Kraftstoffrücklauf 16 und einen Wasserauslass 17. Der Kraftstoffauslass 15 ist mit einer Brennkraftmaschine (siehe Figur 6) korrespondierend verbunden, wodurch gereinigter Kraftstoff aus dem Tank zu der Brennkraftmaschine transportiert werden kann. Der Kraftstoffrücklauf 16 ist ebenfalls korrespondierend mit der Brennkraftmaschine verbunden, wobei zuviel geförderter Kraftstoff bzw. der Rücklauf von der Brennkraftmaschine wieder zurück zu dem Kraftstofffilter 11 geleitet wird. Der Rücklauf wird auf eine Vorwärmeinheit 18 geleitet, wobei entsprechend der Kraftstofftemperatur, insbesondere der im Kraftstofftank 10 herrschenden Kraftstofftemperatur, der zu reinigende Kraftstoff mit dem Rücklauf gemischt wird. Somit wird ein Verblocken des Kraftstofffilters 11 verhindert. Der Kraftstofffilter 11 verfügt über eine Kraftstoffansaugleitung 19, welche als, an den Stirnseiten offenes Rohr ausgebildet ist. Die Kraftstoffansaugleitung 19 ragt vorzugsweise bis zu der tiefsten Stelle in dem Kraftstofftank 10, damit auch bei einer geringen Kraftstofffüllhöhe im Kraftstofftank 10 eine sichere Ansaugung des Kraftstoffes gewährleistet ist. Die Kraftstofffüllhöhe ist mit einem Sensor 20 erfassbar, welcher insbesondere als Sensorband mit einer Vielzahl an Messstellen ausgestattet ist. Hierzu durchragt der Sensor 20 den Kraftstofftank 10, wodurch eine maximale und eine minimale Kraftstofffüllhöhe, sowie die dazwischen liegenden Füllhöhen erfassbar sind. Der Sensor 20 verfügt über einen Stecker 23, welcher mit einer Auswertelektronik (nicht dargestellt) verbindbar ist und somit der Füllstand auf einem Ausgabeinstrument (nicht dargestellt) darstellbar ist. Um Schwingungen des Kraftstofffilters 11 beim Betrieb der Brennkraftmaschine zu verhindern, ist der Kraftstofffilter mit einem Stützdom 21 an einer entsprechenden Aufnahme 22 an dem Kraftstofftank 10 abgestützt. Der Stützdom 21 und die Aufnahme 22 sind senkrecht unter dem Filterkopf 13 angeordnet. Somit ist der Kraftstofffilter einerseits am Filterkopf 13 und andererseits an dem Stützdom 21 fixiert.

Der Wasserauslass 17 ist mit einer Verschlusskappe 24 dichtend verschlossen. Wenn Wasser aus dem Kraftstofffilter 11 abgesaugt werden soll, wird die Verschlusskappe 24 abgenommen und eine entsprechende Saugeinheit (nicht dargestellt) angeschlossen.

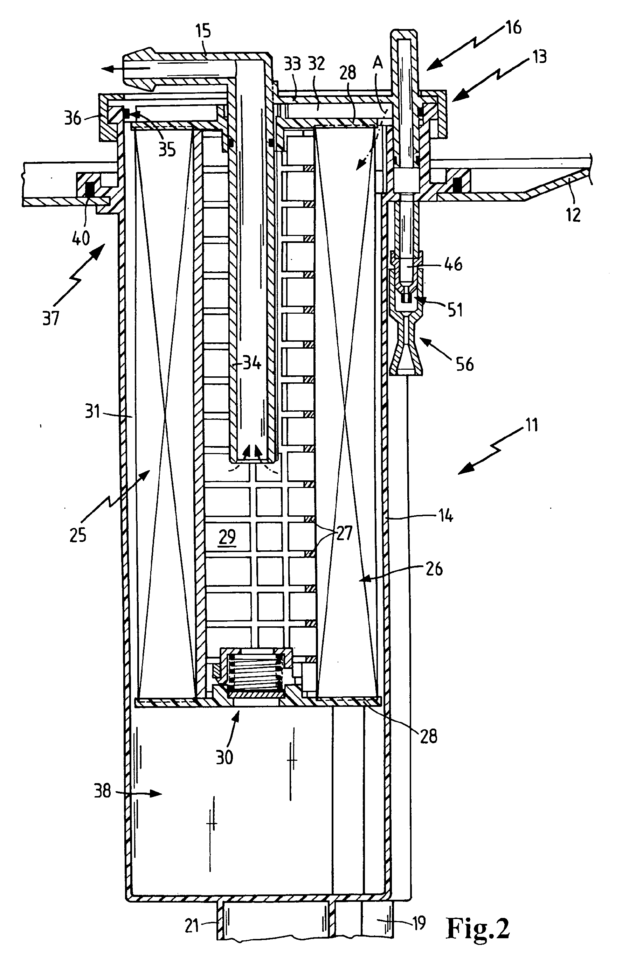

In Figur 2 ist ein Kraftstofffilter gemäß Figur 1 im Schnitt dargestellt. Der Figur 1 entsprechende Bauteile sind mit gleichen Bezugszeichen versehen. Der Kraftstofffilter 11 verfügt über ein Filterelement 25, welches ein Filtermedium 26, ein Stützrohr 27 und Endscheiben 28 aufweist. Das Filtermedium 26 ist dichtend mit den Endscheiben 28 verbunden, wobei ein hohlzylindrischer Innenraum 29 gebildet wird. In dem Innenraum 29, welcher die Reinseite bildet, ist das Stützrohr 27 angeordnet, welches ein kollabieren des Filtermediums 26 verhindert. Das Filtermedium 26 ist derart ausgebildet, dass Wasser aus dem Kraftstoff abgeschieden wird. Hierzu sind die im Stand der Technik bekannten Medien verwendbar. Weiterhin verfügt das Filterelement über ein Umgehungsventil 30, welches bei einer zu großen Druckdifferenz einen Strömungsweg frei gibt. Zwischen dem Filterelement 25 und dem Filtergehäuse 14 ist eine Rohseite 31 gebildet, welche über einen Zwischenraum 32 mit der Kraftstoffansaugleitung 19 verbunden ist. Der Zwischenraum 32 ist zwischen der oberen Endscheibe 28 und einer Abdeckung 33 gebildet, wobei ein Strömungsweg für den zu reinigenden Kraftstoff gemäß Pfeil A vorhanden ist. Das Filterelement 25 ist dichtend auf ein Kraftstoffrohr 34 aufgesteckt, wobei das Kraftstoffrohr mit dem Kraftstoffauslass 15 verbunden ist. Bei diesem Ausführungsbeispiel sind die Abdeckung 33, das Kraftstoffrohr 34 und der Kraftstoffauslass 15 einstückig ausgebildet. Die Abdeckung 33 verfügt über einen Dichtungsabsatz 35 welcher dichtend an dem Filtergehäuse 14 anliegt. Damit sich die Abdeckung 33 beim Betrieb des Kraftstoffmoduls nicht unkontrolliert löst, ist ein Bajonettring 36 vorgesehen. Dieser verbindet die Abdeckung 33 sicher mit dem Filtergehäuse 14. Weiterhin ist die Abdeckung 33 zum Wechseln des Filterelementes 25 einfach von dem Filtergehäuse 14 lösbar. Weiterhin verfügt das Filtergehäuse 14 über einen Bajonettverschluss 37, mit welchem das Filtergehäuse 14 dichtend mit der Wand 12 des Kraftstofftanks 10 verbindbar ist. Die dichtende Verbindung ist über eine axial verpresste Dichtung 40 erzeugt. In dem Filtergehäuse 14 ist ein Wasserspeicher 38 angeordnet, in welchem das aus dem Kraftstoff abgeschiedene Wasser gesammelt wird. Somit wird das abgeschiedene Wasser nicht mit dem, im Kraftstofftank 10 verbleibenden Kraftstoff vermischt. Die Größe des Wasserspeichers 38 ist derart ausgestaltet, dass eine definierte Menge Wasser aufgenommen werden kann und die Entleerung des Wasserspeichers 28 in größeren Zeitzyklen erfolgen kann.

Der zu reinigende Kraftstoff wird durch die Kraftstoffansaugleitung 19 aus dem Kraftstofftank 10 in den Zwischenraum 32 gefördert. Dies kann durch eine, in Strömungsrichtung nach dem Kraftstofffilter angeordnete Saugpumpe (nicht dargestellt) oder durch eine vorgeschaltete Druckpumpe (nicht dargestellt) erfolgen. Von dem Zwischenraum 32 strömt der Kraftstoff gemäß Pfeil A auf die Rohseite 31 und durchströmt das Filterelement 25. Auf der Reinseite 29 tritt der gereinigte Kraftstoff in das Kraftstoffrohr 34 ein und strömt durch den Kraftstoffauslass 15 aus dem Kraftstofffilter 11 aus. Falls der Differenzdruck zwischen der Rohseite 31 und der Reinseite 29 zu groß ist, öffnet das Umgehungsventil 30, wodurch ungereinigter Kraftstoff auf die Reinseite 29 gelangt.

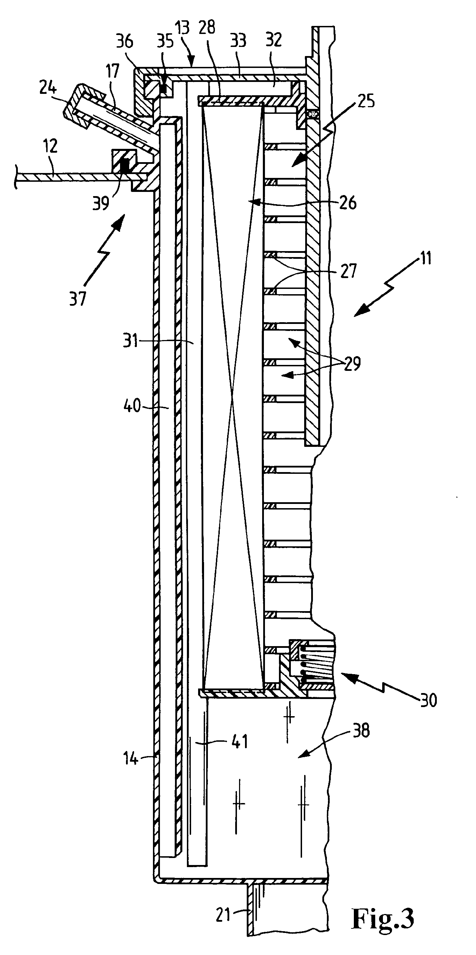

In Figur 3 ist ein Ausschnitt aus dem Kraftstoffmodul, insbesondere aus dem Kraftstofffilter 11 gemäß Figur 1 im Schnitt dargestellt. Der Figur 1 oder 2 entsprechende Bauteile sind mit gleichen Bezugszeichen versehen. In dem Kraftstofffilter 11 ist ein Wassersaugrohr 40 angeordnet, wobei das Wassersaugrohr 40 einerseits mit dem Wasserspeicher 38 und andererseits mit dem Wasserauslass 17 verbunden ist. Das Wassersaugrohr 40 ist einstückig mit dem Filtergehäuse 14 ausgeführt, wobei die Außenwand des Filtergehäuses 14 einen Teil des Wassersaugrohres 40 bildet. Im untersten Bereich des Wasserspeichers 38 ist das Wassersaugrohr 40 geöffnet, wodurch fast das gesamte Wasser aus dem Wasserspeicher 38 herausgesaugt werden kann. Vorzugsweise ist das Filtergehäuse in Kunststoff ausgebildet, wodurch das Wassersaugrohr 40 in einem Arbeitsgang mit dem Filtergehäuse 14 gefertigt werden kann. In dem Filtergehäuse 14 ist ein Wassersensor 41 angeordnet, welcher das gesamte Filtergehäuse 14 durch ragt. Der Wassersensor 41 kann bei vorteilhaften Ausgestaltungen derart ausgeführt sein, dass er unterschiedliche Flüssigkeiten, insbesondere Kraftstoff von Wasser unterscheiden kann. Somit kann die Phasengrenze zwischen dem Kraftstoff und dem Wasser erkannt und eine Absaugung des Wassers aus dem Wasserspeicher 38 rechtzeitig angezeigt werden. Der Wassersensor kann mit einem Anschluss 42 (gemäß Figur 1) an eine entsprechende Auswerteeinheit (nicht dargestellt) verbunden werden.

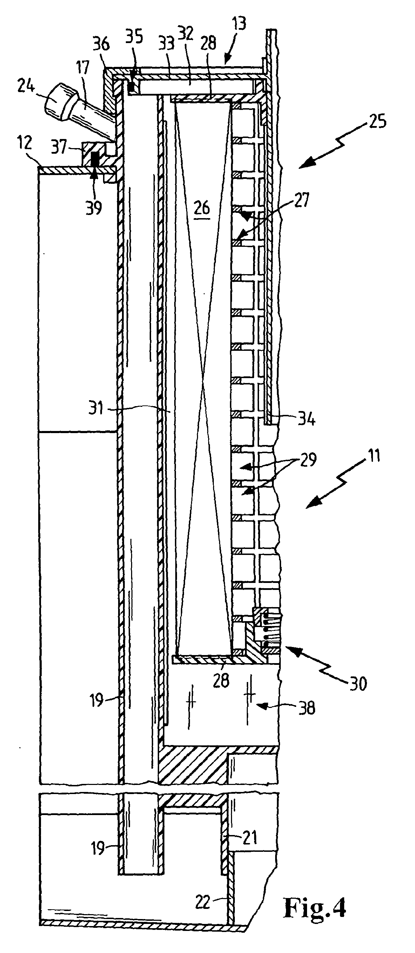

In Figur 4 ist ein weiterer Ausschnitt aus dem Kraftstoffmodul gemäß Figur 1 im Schnitt dargestellt. Der Figur 1 bis 3 entsprechende Bauteile sind mit gleichen Bezugszeichen versehen. Bei diesem Ausschnitt ist die Kraftstoffansaugleitung 19 im Schnitt dargestellt. Weiterhin sind der Stützdom 21 und die Aufnahme 22 im Schnitt dargestellt. Der Stützdom ist auf die Aufnahme 22 aufgesteckt, wobei axiale Toleranzen ausgeglichen werden können. Der Stützdom 21 und die Aufnahme 22 sind als hohlvolumige Bauteile, insbesondere Rohre, ausgebildet, wobei der Kraftstoff nicht in das Innere eindringen kann. Bei anderen Ausführungen können diese Bauteile 21, 22 auch für den Kraftstoff durchlässig sein.

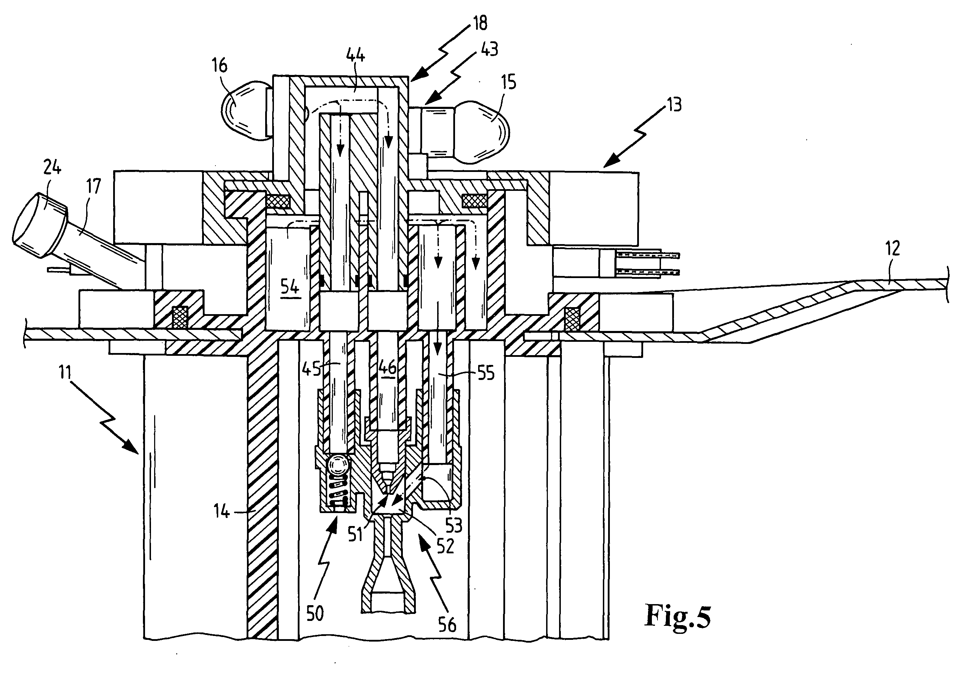

In Figur 5 ist ein Ausschnitt aus dem Kraftstofffilter gemäß Figur 1 im Schnitt entlang der Schnittlinie X-X dargestellt. Der Figur 1 bis 4 entsprechende Bauteile sind mit gleichen Bezugszeichen versehen. Bei dieser Darstellung ist eine Entgasungseinheit 43 im Schnitt dargestellt. Die Entgasungseinheit 43 ist der Vorwärmeinheit 18 nachgeschaltet. Der durch den Kraftstoffrücklauf 16 in den Kraftstofffilter 11 eintretende Volumenstrom gelangt in einen Verteilerraum 44, von wo aus er in einen Tankrücklauf 45 und eine Förderleitung 46 eintreten kann. In dem Tankrücklauf 46 ist ein Ventil 50 angeordnet, welches insbesondere zur Druckregulierung in der Förderleitung 46 vorgesehen ist. Die Förderleitung 46 verfügt über eine Düse 51, durch welche ein definierter Kraftstoffstrahl hindurchströmen kann. In Strömungsrichtung hinter der Düse 51 ist ein Mischraum 52 angeordnet, welcher sowohl mit der Düse 51, als auch mit einer Bohrung 53 verbunden ist. Die Bohrung 53 verbindet den Mischraum 52 über eine Luftleitung 55 mit einem Gassammelraum 54. Nach dem Mischraum 52 ist eine Saugstrahlpumpe 56 angeordnet, welche durch den Rücklauf aus der Förderleitung 46 Gas aus der Luftleitung bzw. dem Gassammelraum 54 saugt und in den Kraftstofftank 10 fördert. Somit wird der Kraftstofffilter 11 entgast. Das Gas wird in dem Kraftstofftank 10 gesammelt und über dessen Entlüftungssystem (nicht dargestellt) an die Umgebung abgegeben.

In Figur 6 ist eine Schemadarstellung des Kraftstoffmoduls dargestellt. In dem Kraftstofftank 10 ist der Kraftstofffilter 11 angeordnet, wobei die Proportionen der Bauteile zueinander nicht der Realität entsprechen. Selbstverständlich kann der Kraftstofftank um ein Vielfaches größer als der Kraftstofffilter 11 ausgeführt sein. Die in den vorherigen Figuren beschriebenen Bauteile sind mit gleichen Bezugszeichen versehen. An den Kraftstoffauslass 15 schließt eine Förderpumpe 57 an, welche den Kraftstoff über die Kraftstoffansaugleitung 19 aus dem Kraftstofftank 10 in den Kraftstofffilter 11 saugt. Der Kraftstoff wird durch das Filterelement 25 gereinigt. Da die Förderpumpe 57 den Kraftstoff ansaugt entstehen im Kraftstofffilter Gasblasen, welche sich im Gassammelraum 54 (siehe Figur 5) im Kraftstofffilter 11 sammeln. Da das Filterelement 25 im Kraftstoff enthaltenes Wasser abscheidet, sammelt sich das Wasser, welches eine höhere Dichte als der Kraftstoff aufweist, im Wasserspeicher 38 des Kraftstofffilters 11. Der gereinigte Kraftstoff wird nach der Förderpumpe 57 durch eine Hochdruckpumpe 58 auf den erforderlichen Betriebsdruck einer nachfolgenden Brennkraftmaschine 59 gebracht. Der zuviel geförderte, nicht verbrauchte Kraftstoff wird als Rücklauf dem Kraftstoffrücklauf 16 zugeführt. Bei Bedarf, insbesondere wenn die Kraftstofftemperatur zu gering ist, wird der Rücklauf über die Vorwärmeinheit 18 zur Vorwärmung des Kraftstoffes verwendet, damit das Filterelement 25 nicht verblockt. Weiterhin kann der Rücklauf zur Entgasung des Kraftstofffilters 11 verwendet werden. Hierzu saugt die Saugstrahlpumpe 56 die Gasblasen aus dem Kraftstofffilter 11, wobei das Ventil 50 die erforderlichen Druckverhältnisse einstellt. Der mit den Gasblasen vermische Rücklauf wird dann in den Kraftstofftank 10 abgegeben.
Falls die Funktionen Kraftstoffvorwärmung und/oder Entgasung nicht erforderlich sind, kann der Rücklauf auch direkt in den Kraftstofftank abgegeben werden.

## Patentansprüche

1. Kraftstoffmodul, insbesondere für Dieselkraftstoff einer Brennkraftmaschine, aufweisend einen Kraftstofftank (10) und einen Kraftstofffilter (11),
- wobei der Kraftstofftank (10) über eine Wand (12) verfügt, welche das Volumen des Kraftstofftanks (10) umschließt,
- wobei die Wand (12) im Bereich des Kraftstofffilters (11) über eine Öffnung verfügt,
- wobei der Kraftstofffilter (11) im Bereich der Öffnung mit der Wand (12) dichtend verbunden ist,
**dadurch gekennzeichnet, dass**
- der Kraftstofffilter (11) über ein Filtermedium (26) verfügt, welches zur Abscheidung von Wasser aus dem zu reinigenden Kraftstoff geeignet ist und innerhalb des Kraftstofffilters (11) ein Wasserspeicher (38) angeordnet ist.

2. Kraftstoffmodul nach Anspruch 1, **dadurch gekennzeichnet, dass** der Kraftstofffilter (11) mit einem Bajonettverschluss (37) mit dem Kraftstofftank (10) verbunden ist, wobei eine Dichtung (39) zur Abdichtung in dem Bajonettverschluss (37) angeordnet ist.

3. Kraftstoffmodul nach einem der vorangehenden Ansprüche, **dadurch gekennzeichnet, dass** in dem Kraftstofftank (10) ein Sensor (20) angeordnet ist, mit welchem der Füllstand in dem Kraftstofftank (10) erfassbar ist.

4. Kraftstoffmodul nach einem der vorangehenden Ansprüche, **dadurch gekennzeichnet, dass** der Kraftstofffilter (11) über einen Wassersensor (41) verfügt, mit welchem der Wasserfüllstand in dem Wasserspeicher (38) erfassbar ist.

5. Kraftstoffmodul nach einem der vorangehenden Ansprüche, **dadurch gekennzeichnet, dass** ein Wassersaugrohr (40) vorgesehen ist, welches einerseits mit dem Wasserspeicher (38) und andererseits mit einem außerhalb des Kraftstofftanks (10) angeordneten Wasserauslass (17) verbunden ist.

6. Kraftstoffmodul nach einem der vorangehenden Ansprüche, **dadurch gekennzeichnet, dass** der Kraftstofffilter (11) über eine Abstützung (21,22) an dem Kraftstofftank (10) verfügt, welche gegenüberliegend zu der Öffnung angeordnet ist.

7. Kraftstoffmodul nach einem der vorangehenden Ansprüche, **dadurch gekennzeichnet, dass** der Kraftstofffilter (11) über eine Entgasungsvorrichtung (43) verfügt.

8. Kraftstoffmodul nach einem der vorangehenden Ansprüche, **dadurch gekennzeichnet, dass** der Kraftstofffilter (11) über eine Vorwärmeinheit (18) verfügt.
